# EUROPÄISCHE PATENTSCHRIFT

(11) **EP 2 663 410 B1**
(45) Veröffentlichungstag und Bekanntmachung des Hinweises auf die Patenterteilung: **19.11.2014**
(21) Anmeldenummer: 12700086.7
(22) Anmeldetag: 05.01.2012
(51) Int. Cl.: B08B 15/02, G01G 21/28, B01L 1/00, G01G 21/30

(54) **ARBEITSKABINE MIT INTEGRIERTER WAAGE**
WORK BOOTH HAVING AN INTEGRATED SCALE
CABINE DE TRAVAIL POURVUE D'UNE BALANCE INTÉGRÉE

(30) Priorität: 11.01.2011 DE 102011000085
(43) Veröffentlichungstag der Anmeldung: 20.11.2013
(73) Patentinhaber: Sartorius Lab Instruments GmbH & Co. KG, 37075 Göttingen (DE)
(72) Erfinder: GRAF, Winfried, 37127 Niemetal (DE); LAUBSTEIN, Michael, 37077 Göttingen (DE); VON STEUBEN, Jan, 37075 Göttingen (DE); PERTSCH, Thomas, 37077 Göttingen (DE); AHLBRECHT, Dirk, 37170 Uslar (DE); SCHRADER, Christian, 37194 Bodenfelde (DE)
(86) Internationale Anmeldenummer: PCT/EP2012/000030
(87) Internationale Veröffentlichungsnummer: WO 2012/095279

(56) Entgegenhaltungen:
- EP-A1- 2 230 494
- EP-A2- 1 106 978
- DE-A1- 10 031 415
- FR-A1- 2 889 987
- JP-A- 2009 115 471

## Beschreibung

Die Erfindung betrifft eine Arbeitskabine mit integrierter Waage, insbesondere integrierter Feinwaage.

Feinwaagen werden in Laboratorien der chemischen und pharmazeutischen Industrie und Forschung verwendet, um kleine Mengen von Substanzen abzuwiegen, beispielsweise weil für eine Analyse eine bestimmte Menge einer Probe benötigt wird oder weil verschiedene Substanzen in einem bestimmten Verhältnis gemischt werden sollen. In einigen Fällen werden dabei Substanzen verwendet, die toxisch sind. In diesem Fall muss das Dosieren und Abwiegen in einer sogenannten Sicherheitsarbeitskabine stattfinden, also einer Arbeitskabine, die mit einer Entlüftung bzw. Absaugung versehen ist. Dies gewährleistet, dass alle Partikel bzw. Aerosole der Substanzen, die bei der Handhabung in die Umgebungsluft gelangen, kontrolliert abgesaugt werden und demzufolge den Bediener nicht gefährden können.

Es ist derzeit üblich, in eine universelle Arbeitskabine, die in den Laboratorien vorhanden ist, in Abhängigkeit von den durchzuführenden Dosier- und Analysevorgängen diejenigen Geräte hineinzustellen, die gebraucht werden. Wenn es also erforderlich ist, von einer Substanz kleinste Mengen abzuwiegen, wird in die Arbeitskabine eine Feinwaage hineingestellt. Nachteilig dabei ist, dass nach dem Abwiegen das komplette Gerät wieder gereinigt werden muss, da andernfalls eine Kreuzkontamination mit Substanzen, die in einem sich anschließende Wägevorgang dosiert werden, nicht ausgeschlossen werden kann. Allerdings ist eine solche Feinwaage üblicherweise nur sehr schwierig vollständig zu reinigen, da Bauteile wie Elektronikboxen, Netzteile oder Kabel mit Steckern nicht glattflächig sind.

Aus der EP 1 106 978 A2 ist eine Analysenwaage mit einer Vorrichtung zur Erzeugung eines ionisierten Luftstroms in einer Bypassleitung des Wägeraums bekannt.

Aus der DE 100 31 415 A1 ist eine Analysewaage mit einem Windschutz gezeigt, der einen Wägeraum umgibt. Dem Wägeraum ist eine Luftzirkulation zugeordnet, die mit einer Heizvorrichtung versehen ist.

Aus der EP 2 230 494 A1 ist eine Waage mit Wägeraum sowie nebengeordneter Kammer bekannt, wobei der Wägeraum und die nebengeordnete Kammer zur Bildung einer stabilen Luftschichtung bzw. zum Druckausgleich strömungsverbunden sind.

Die Aufgabe der Erfindung besteht darin, den nach dem Abwiegen von z.B. toxischen Substanzen in einer Arbeitskabine notwendigen Reinigungsvorgang so weit wie möglich zu vereinfachen, den Produkt- und/ oder Personenschutz zu verbessern sowie eine optimale Abstimmung der einzelnen Baugruppen zu erreichen.

Zur Lösung dieser Aufgabe ist erfindungsgemäß eine Arbeitskabine mit integrierter Waage nach Anspruch 1 vorgesehen. Die Absaugung kann ggf. durch eine Regelung oder Steuerung auf die konkreten Erfordernisse angepasst werden. Die Erfindung beruht auf dem Grundgedanken, die beiden bisher getrennt ausgeführten Geräte Arbeitskabine und Feinwaage so ineinander zu integrieren, dass im Arbeitsraum der Arbeitskabine lediglich die Teile angeordnet sind, die für den Wägevorgang unabdingbar sind. Dies ist insbesondere der Lastaufnehmer. Der Großteil der Bauteile der Feinwaage ist außerhalb des Arbeitsraumes der Arbeitskabine angeordnet, so dass der Arbeitsraum der Arbeitskabine sehr leicht gereinigt werden kann, nachdem ein Wägevorgang abgeschlossen ist. Zusätzlich wird der Personenschutz und oder Produktschutz verbessert, und die Komponenten können funktionell optimal aufeinander abgestimmt werden.

Vorzugsweise ist zwischen dem Arbeitsraum der Arbeitskabine und dem Wägesystem eine Trennwand vorgesehen, die mit einer Durchführung für das Koppelelement versehen ist, wobei das Koppelelement im Wesentlichen mediendicht durch die Durchführung hindurchgeführt ist. Die mediendichte Durchführung gewährleistet, dass von den Substanzen, mit denen im Inneren der Arbeitskabine gearbeitet wird, nahezu keine Partikel/ Aerosole durch die Trennwand hindurch zum Wägesystem gelangen können, das nur sehr schwer gereinigt werden kann. Der Begriff "im Wesentlichen mediendichte Durchführung" bedeutet dabei nicht, dass durch die Durchführung überhaupt keine Medien ausgetauscht werden können. Entscheidend ist, dass die Substanzen, mit denen im Arbeitsraum der Arbeitskabine hantiert wird, nicht durch die Durchführung hindurchtreten können.

Vorzugsweise ist vorgesehen, dass die Trennwand mit einer Rückwand der Arbeitskabine zusammenfällt. In diesem Fall ergibt sich eine glattflächige Rückwand, die besonders einfach gereinigt werden kann.

Gemäß einer alternativen Ausgestaltung ist vorgesehen, dass die Trennwand in die Arbeitskabine hineinragt. Dies ermöglicht, den Lastaufnehmer näher an der Vorderseite der Arbeitskabine anzuordnen, wo er für einen Bediener besser zugänglich ist.

Gemäß einer Ausführungsform der Erfindung ist vorgesehen, dass in der Trennwand eine Öffnung vorgesehen ist und dass eine Druckdifferenz zwischen dem Arbeitsraum der Arbeitskabine und einem Raum etabliert werden kann, in dem das Wägesystem angeordnet ist. Mit dieser Druckdifferenz kann, wenn der Druck im Inneren der Arbeitskabine niedriger ist als in dem Raum, in welchem das Wägesystem angeordnet ist, eine Luftströmung aus dem Raum des Wägesystems hin zum Arbeitsraum der Arbeitskabine herbeigeführt werden. Eine solche Luftströmung verhindert, dass die in der Arbeitskabine gehandhabten Substanzen in den Raum des Wägesystems gelangen können.

Vorzugsweise ist das Wägesystem in einem Gehäuse angeordnet, das mit einer Einlassöffnung für Außenluft versehen ist. Auf diese Weise kann ein sehr einfacher Aufbau erhalten werden, da der geringe Unterdruck, der in dem Arbeitsraum bei aktiver Absaugung gegenüber der Umgebung aufgebaut wird, dazu verwendet werden kann, eine Luftströmung aus dem Gehäuse des Wägesystems heraus und in den Arbeitsraum zu erzielen.

Vorzugsweise ist die Einlassöffnung mit einer Blende versehen, deren Querschnitt verändert werden kann. Dies ermöglicht es, mit geringem Aufwand die Luftströmung vom Gehäuse des Wägesystems in den Arbeitsraum zu steuern.

Dabei ist vorzugsweise vorgesehen, dass die Einlassöffnung verschließbar ist. Auf diese Weise kann im Bedarfsfall eine Luftströmung aus dem Gehäuse des Wägesystems in die Arbeitskabine unterbunden werden.

Gemäß einer Ausführungsform ist der Einlassöffnung ein Gebläse zugeordnet. Dies ermöglicht, unabhängig von der Druckdifferenz zwischen Arbeitskabine und Gehäuse des Wägesystems eine Luftströmung aus dem Gehäuse in den Arbeitsraum hinein zu etablieren.

Vorzugsweise ist dabei der Einlassöffnung ein Filter zugeordnet. Dies gewährleistet, dass in das Gehäuse des Wägesystems keine Staubpartikel oder andere Verschmutzungen gelangen können.

Gemäß einer Ausführungsform der Erfindung ist vorgesehen, dass das Wägesystem in einem Gehäuse angeordnet ist, welches zur Außenluft hin abgeschlossen ist. Bei dieser Ausgestaltung wird ein Luftaustausch zwischen dem Arbeitsraum und dem Gehäuse des Wägesystems weitestgehend ausgeschlossen, so dass Verunreinigungen aus dem Arbeitsraum kaum in das Gehäuse des Wägesystems eintreten können.

Gemäß einer Ausgestaltung der Erfindung ist vorgesehen, dass der Lastaufnehmer von einem Windschutz umgeben ist. Auf diese Weise wird verhindert, dass der Wägevorgang durch eine Luftströmung im Inneren des Arbeitsraumes verfälscht wird, wenn ein Abzug der Arbeitskabine aktiviert ist. Zusätzlich kann ein Windschutz auch anderweitige Verfälschungen des Wägevorgangs verhindern, beispielsweise durch elektrostatische Aufladung oder Wärmestrahlung.

In den Arbeitsraum der Arbeitskabine können vorteilhaft verschiedene weitere Komponenten die für den Arbeitsprozess von Bedeutung sind eingebracht werden, beispielsweise Einwägehilfen, Anzeige und Bedienelemente, Hilfsmittel zur Reduzierung statischer Aufladungen, Entsorgungs-, Reinigungsvorrichtungen sowie Desinfektions- und Dekontaminierungseinrichtungen.

Gemäß einer Ausgestaltung ist vorgesehen, dass die Absaugvorrichtung mit einem flexiblen Schlauch verbunden werden kann, um bedarfsweise Partikel aufzusaugen und dem Filter zuzuführen.

Gemäß einer Ausgestaltung der Erfindung ist vorgesehen, dass im Reinigungsfall die Luftströmung durch den Arbeitsraum wesentlich erhöht werden kann.

Gemäß einer weiteren Ausgestaltung der Erfindung ist vorgesehen, dass die Arbeitskabine über integrierte Selbstdiagnosefunktionen z.B. Filterintegritätstest verfügt.

Gemäß einer weiteren Ausgestaltung der Erfindung ist vorgesehen, dass der Durchgriff verschlossen werden kann.

Gemäß einer weiteren Ausgestaltung ist vorgesehen, dass im Arbeitsraum Möglichkeiten zur Lagerung und Konditionierung von Proben und Gefäßen vorgesehen sind.

Selbstverständlich können mehrere solche Arbeitskabinen gekoppelt werden.

Die Erfindung wird nachfolgend anhand zweier Ausführungsformen beschrieben, die in den beigefügten Zeichnungen dargestellt sind. In diesen zeigen:
- Figur 1 schematisch eine Arbeitskabine mit integrierter Feinwaage gemäß einer ersten Ausführungsform der Ereindung; und
- Figur 2 schematisch eine Arbeitskabine mit integrierter Feinwaage gemäß einer zweiten Ausführungsform der Erfindung.

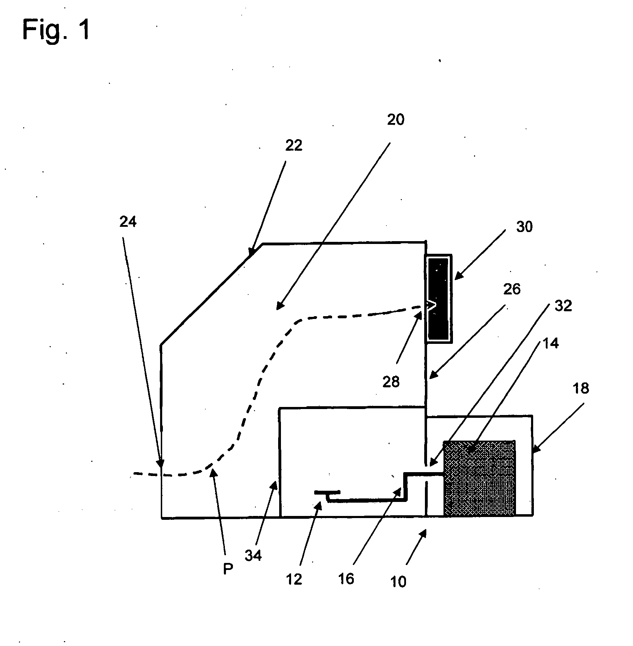

In Figur 1 ist eine Feinwaage 10 gezeigt, die einen Lastaufnehmer 12, ein Wägesystem 14 und eine Koppelelement 16 aufweist, die den Lastaufnehmer 12 mit dem Wägesystem 14 verbindet. Das Wägesystem 14 ist in einem Gehäuse 18 angeordnet, während sich der Lastaufnehmer 12 in einem Arbeitsraum 20 einer Arbeitskabine 22 befindet. Die Arbeitskabine 22 weist an ihrer Vorderseite einen Durchgriff 24 auf, durch den ein Bediener in den Arbeitsraum 20 der Arbeitskabine 22 hineingreifen kann. An einer Rückwand 26 der Arbeitskabine 22 ist eine Abzugsöffnung 28 vorgesehen, der die Saugseite einer Gebläse Filtereinheit 30 (vereinfacht auch als "Abzug" bezeichnet) zugeordnet ist.

Die Rückwand 26 ist hier in vertikaler Richtung durchgehend ausgeführt, so dass sie auch Teil des Gehäuses 18 des Wägesystems 14 ist. In diesem Bereich wirkt die Rückwand 26 also als Trennwand zwischen dem Arbeitsraum des Gehäuses 18 und dem Arbeitsraum 20 der Arbeitskabine 22.

In der Trennwand ist eine Öffnung 32 vorgesehen, durch die hindurch sich die Koppelelement 16 vom Lastaufnehmer 12 zum Wägesystem 14 erstreckt. Die Öffnung 32 ist Teil einer im Wesentlichen mediendichten Durchführung für die Koppelelement 16, mit der verhindert wird, dass Substanzen, mit denen im Arbeitsraum 20 der Arbeitskabine 22 hantiert wird, in das Innere des Gehäuses 18 des Wägesystems 14 gelangen. Die im Wesentlichen mediendichte Durchführung kann hier durch Zusammenwirken einer Vielzahl von Einzelgestaltungen erzielt werden. Ein Bestandteil der im Wesentlichen mediendichten Durchführung besteht darin, dass das Gehäuse 18 des Wägesystems 14 zur Außenluft hin abgeschlossen ist. Somit findet grundsätzlich kein Luftaustausch zwischen dem Gehäuse 18 und dem Arbeitsraum 20 der Arbeitskabine 22 statt, so dass von den Substanzen, die im Inneren der Arbeitskabine 22 gehandhabt werden, nichts durch die Öffnung 32 in das Gehäuse 18 eintreten sollte. Teil der im Wesentlichen mediendichten Durchführung ist auch, dass die Öffnung 32 so klein wie möglich ausgeführt ist.

Teil der im Wesentlichen mediendichten Durchführung können auch Blenden, Labyrinthdichtungen, Membranen, elektrostatische Filter, Flüssigkeitsabdichtungen oder andere Gestaltungen sein, die der Öffnung 32 zugeordnet sind und mit denen verhindert wird, dass die Substanzen, mit denen in der Arbeitskabine 22 hantiert werden, in das Gehäuse 18 des Wägesystems 14 eintreten.

Wenn ein Benutzer mit der Feinwaage 10 eine bestimmte Menge einer oder mehreren Substanzen abwiegen möchte, greift er durch den Durchgriff 24 in den Arbeitsraum 20 der Arbeitskabine 22 hinein, wo er mit den Substanzen gefahrlos hantieren kann. Der Abzug 30 gewährleistet, dass die Teile der Substanzen, die in die Luft gelangen, durch die Abzugsöffnung 28 hindurch aus dem Arbeitsraum 20 abgesaugt werden und nicht durch den Durchgriff 24 hindurch in die Umgebungsluft gelangen können. Die vom Abzug 30 erzeugte Luftströmung ist in Figur 1 mit dem Pfeil P symbolisiert. Um zu verhindern, dass die Luftströmung den Wägevorgang verfälscht, kann im Arbeitsraum 20 der Arbeitskabine 22 zusätzlich ein hier schematisch angedeuteter Windschutz 34 vorgesehen sein.

Wenn der Wägevorgang beendet ist, muss der Arbeitsraum 20 der Arbeitskabine 22 gereinigt werden, um zu gewährleisten, dass in der Arbeitskabine keine Reste der abgewogenen Substanzen verbleiben. Diese könnten zum einen gesundheitsgefährdend sein und zum anderen andere Materialproben verunreinigen, die in der Zukunft im Inneren der Arbeitskabine 22 abgewogen werden sollen. Daher muss der Arbeitsraum 20 der Arbeitskabine 22 gereinigt werden. Das vollständige Reinigen der Arbeitskabine 22 ist mit geringem Aufwand möglich, da diese im Wesentlichen aus ebenen Flächen besteht, die gut gereinigt werden können. Zusätzlich ist der Windschutz 34 vorzugsweise leicht demontierbar, so dass er vollständig aus der Arbeitskabine entfernt werden kann. Zusätzlich ist der Lastaufnehmer 12 abnehmbar, so dass auch er leicht außerhalb der Arbeitskabine 22 gereinigt werden kann. Weiterhin kann vorgesehen sein, dass die Koppelelement 16 zumindest teilweise demontiert werden kann, damit im Inneren der Arbeitskabine 22 möglichst wenige Bauteile verbleiben, die dort gereinigt werden müssen. Zum Reinigen kann der Luftstrom durch die Arbeitskabine stark erhöht werden, indem der Abzug aus einer niedrigen Betriebsgeschwindigkeit, die für Wägevorgänge geeignet ist, in eine deutlich höhere Betriebsgeschwindigkeit geschaltet wird.

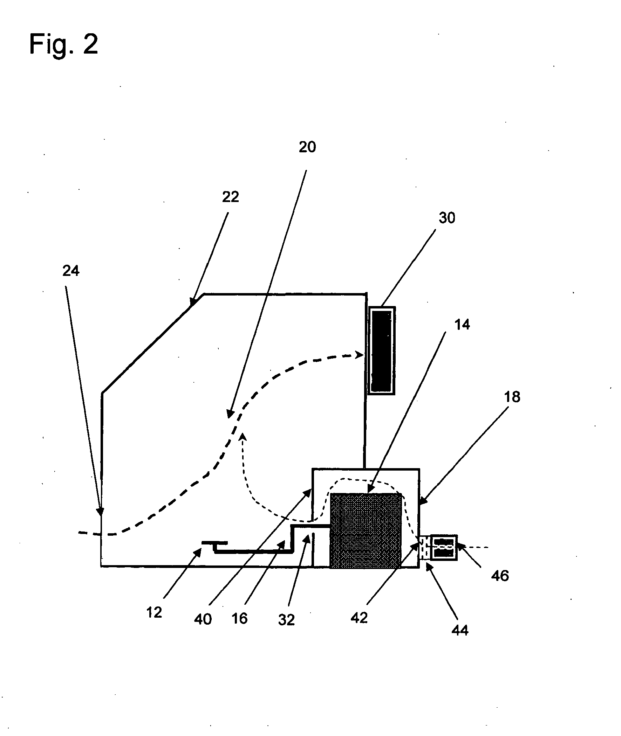

In Figur 2 ist eine zweite Ausführungsform gezeigt. Für die von der ersten Ausführungsform bekannten Bauteile werden dieselben Bezugszeichen verwendet, und es wird insoweit auf die obigen Erläuterungen verwiesen.

Die zweite Ausführungsform unterscheidet sich von der ersten Ausführungsform hinsichtlich der geometrischen Anordnung des Gehäuses 18 des Wägesystems 14 sowie dadurch, dass bei der zweiten Ausführungsform das Gehäuse 18 zur Umgebung geöffnet ist, so dass eine kontrollierte Durchströmung des Gehäuses 18 erzielt werden kann.

Bei der zweiten Ausführungsform fällt die Rückwand der Arbeitskabine 22 nicht mit der Trennwand zusammen, die zwischen dem Inneren des Gehäuses 18 und dem Arbeitsraum 20 der Arbeitskabine 22 vorhanden ist. Wie in Figur 2 zu sehen ist, ist hier eine abgesetzte Trennwand 40 vorhanden, die näher am Durchgriff 24 angeordnet ist als die Rückwand 26 der Arbeitskabine 22. Dies führt dazu, dass auch der Lastaufnehmer 12 näher am Durchgriff 24 angeordnet ist und somit leichter von einem Bediener erreicht werden kann. Außerdem kann der oberhalb der Trennwand 40 gebildete Absatz auf der Oberseite des Gehäuses 18 als zusätzliche Ablage genutzt werden.

Im Unterschied zur ersten Ausführungsform ist bei der zweiten Ausführungsform das Gehäuse 18 des Wägesystems 14 mit einer Einlassöffnung 42 versehen, der ein Filter 44 und ein Gebläse 46 zugeordnet sind. Dies ermöglicht es, dem Arbeitsraum des Gehäuses 18 aktiv Außenluft zuzuführen, die durch die Öffnung 32 in den Arbeitsraum 20 der Arbeitskabine 22 abgeführt wird. Dadurch wird eine kontrollierte Luftströmung aus dem Gehäuse 18 heraus im Bereich der im Wesentlichen mediendichten Durchführung gewährleistet, so dass es den Substanzen, mit denen im Arbeitsraum 20 der Arbeitskabine 22 hantiert wird, nicht möglich ist, in das Gehäuse 18 zu gelangen.

Das Gebläse 46 ist dabei so steuerbar, dass die Luftströmung durch die Öffnung 32 der Trennwand 40 auf einen gewünschten Wert eingestellt werden kann, der einerseits so groß ist, dass keine Substanzen aus der Arbeitskabine 22 in das Gehäuse 18 gelangen können, andererseits jedoch so niedrig ist, dass der Wägevorgang nicht verfälscht wird.

Alternativ zum Gebläse 46 kann der Einlassöffnung 42 eine Blende zugeordnet sein, die insbesondere einen steuerbaren Querschnitt hat. Bei dieser Ausgestaltung wird die Luftströmung aus dem Gehäuse 18 heraus in die Arbeitskabine 22 passiv erhalten, nämlich aufgrund des Unterdrucks, der beim Betrieb des Abzugs 30 in der Arbeitskabine 22 gegenüber der Umgebungsluft vorliegt. Dabei kann der Querschnitt der Blende auf einen solchen Wert eingestellt werden, dass sich die gewünschte Luftströmung einstellt.

Im Hinblick auf das Risiko, dass eine Luftströmung durch die Öffnung 32 den Wägevorgang verfälscht, kann vorgesehen sein, das Gebläse 46 kurzzeitig abzuschalten, wenn der Wägevorgang durchgeführt werden soll, und das Gebläse anschließend wieder einzuschalten. Wenn anstelle des Gebläses eine steuerbare Blende verwendet wird, wird die Blende während des Wägevorgangs vorzugsweise geschlossen. Auf diese Weise wird die Luftströmung aus dem Gehäuse 18 in den Arbeitsraum 20 der Arbeitskabine 22 kurzzeitig unterbrochen, so dass der Wägevorgang durchgeführt werden kann. Wenn unmittelbar nach dem Wägevorgang die Luftströmung wieder etabliert wird, ergibt sich insgesamt nur ein sehr vernachlässigbares Risiko, dass während des kurzen Wägevorgangs Substanzen aus der Arbeitskabine 22 in das Innere des Gehäuses 18 gelangen.

Auch bei der zweiten Ausführungsform kann ein Windschutz verwendet werden.

### Bezugszeichenliste:

- 10: Feinwaage
- 12: Lastaufnehmer
- 14: Wägesystem
- 16: Koppelelement
- 18: Gehäuse
- 20: Arbeitsraum
- 22: Arbeitskabine
- 24: Durchgriff
- 26: Rückwand
- 28: Abzugsöffnung
- 30: Gebläse-Filtereinheit
- 32: Öffnung
- 34: Windschutz
- 40: Trennwand
- 42: Einlassöffnung
- 44: Filter
- 46: Gebläse

## Patentansprüche

1. Arbeitskabine (22) mit integrierter Waage (10), mit einem Lastaufnehmer (12), der in einem Arbeitsraum (20) der Arbeitskabine (22) angeordnet ist, einem Wägesystem (14), das außerhalb des Arbeitsraumes (20) der Arbeitskabine (22) angeordnet ist, und einem Koppelelement (16), das den Lastaufnehmer (12) mit dem Wägesystem (14) verbindet, wobei der Arbeitsraum (20) der Arbeitskabine (22) eine Abzugsöffnung (28) aufweist, der die Saugseite einer Gebläse-Filtereinheit 30, also eines Abzugs, zugeordnet ist und durch die Luft aus dem Arbeitsraum (20) der Arbeitskabine (22) abgesaugt werden kann.

2. Arbeitskabine nach Anspruch 1, **dadurch gekennzeichnet, dass** zwischen der Arbeitsraum (20) und dem Wägesystem (14) eine Trennwand (40) vorgesehen ist, die mit einer Durchführung für die Koppelelement (16) versehen ist, und dass das Koppelelement (16) im Wesentlichen mediendicht durch die Durchführung hindurchgeführt ist.

3. Arbeitskabine nach Anspruch 2, **dadurch gekennzeichnet, dass** die Trennwand (40) mit einer Rückwand (26) der Arbeitskabine (22) zusammenfällt.

4. Arbeitskabine nach Anspruch 2, **dadurch gekennzeichnet, dass** die Trennwand (40) in den Arbeitsraum (20) hineinragt.

5. Arbeitskabine nach einem der Ansprüche 2 bis 4, **dadurch gekennzeichnet, dass** in der Trennwand (40) eine Öffnung (32) vorgesehen ist und dass eine Druckdifferenz zwischen der Arbeitsraum (20) und einem Raum etabliert werden kann, in dem das Wägesystem (14) angeordnet ist.

6. Arbeitskabine nach Anspruch 5, **dadurch gekennzeichnet, dass** das Wägesystem (14) in einem Gehäuse (18) angeordnet ist, das mit einer Einlassöffnung (42) für Außenluft versehen ist.

7. Arbeitskabine nach Anspruch 6, **dadurch gekennzeichnet, dass** die Einlassöffnung (42) mit einer Blende versehen ist, deren Querschnitt verändert werden kann.

8. Arbeitskabine nach Anspruch 6 oder Anspruch 7, **dadurch gekennzeichnet, dass** die Einlassöffnung (42) verschließbar ist.

9. Arbeitskabine nach einem der Ansprüche 6 bis 8, **dadurch gekennzeichnet, dass** der Einlassöffnung (42) ein Gebläse (46) zugeordnet ist.

10. Arbeitskabine nach einem der Ansprüche 6 bis 9, **dadurch gekennzeichnet, dass** der Einlassöffnung (42) ein Filter (44) zugeordnet ist.

11. Arbeitskabine nach einem der Ansprüche 1 bis 4, **dadurch gekennzeichnet, dass** das Wägesystem (14) in einem Gehäuse (18) angeordnet ist, welches zur Außenluft hin abgeschlossen ist.

12. Arbeitskabine nach Anspruch 9, **dadurch gekennzeichnet, dass** das Gebläse mit einer niedrigen Stufe für einen Wägevorgang und einer sehr viel höheren Stufe für einen Reinigungsvorgang betrieben werden kann.

13. Arbeitskabine nach einem der vorhergehenden Ansprüche, **dadurch gekennzeichnet, dass** der Lastaufnehmer (12) von einem Windschutz (34) umgeben ist.

14. Arbeitskabine nach einem der vorhergehenden Ansprüche, **dadurch gekennzeichnet, dass** die Arbeitskabine (22) einen Durchgriff (24) aufweist, durch den hindurch ein Benutzer in die Arbeitskabine (22) hineingreifen kann.

15. Arbeitskabine nach einem der vorhergehenden Ansprüche, **dadurch gekennzeichnet, dass** sie einen integrierten Staubsauger aufweist.

16. Arbeitskabine nach einem der vorhergehenden Ansprüche, **dadurch gekennzeichnet, dass** sie eine Selbstdiagnoseeinheit aufweist.

17. Arbeitskabine nach einem der vorhergehenden Ansprüche, **dadurch gekennzeichnet, dass** sie einen verschließbaren Durchgriff aufweist.

## Claims

1. Work cabin (22) with integrated weighing means (10), with a load pick-up (12), arranged in a workspace (20) of the work cabin (22), a weighing system (14) arranged outside the workspace (20) of the work cabin (22) and a coupling element (16) connecting the load pick-up (12) with the weighing system (14), wherein the workspace (20) of the work cabin (22) has an extraction opening (28) which is associated with the suction side of a fan filter unit (30), thus an extractor, and by which air can be sucked out of the workspace (20) of the work cabin (22).

2. Work cabin according to claim 1, **characterised in that** provided between the workspace (20) and the weighing system (14) is a partition wall (40) provided with a passage for the coupling element (16) and that the coupling element (16) is led substantially media-tightly through the passage.

3. Work cabin according to claim 2, **characterised in that** the partition wall (40) coincides with a back wall (26) of the work cabin (22).

4. Work cabin according to claim 2, **characterised in that** the partition wall (40) protrudes into the workspace (20).

5. Work cabin according to any one of claims 2 to 4, **characterised in that** an opening (32) is provided in the partition wall (40) and that a pressure difference can be established between the workspace (20) and a space in which the weighing system (14) is arranged.

6. Work cabin according to claim 5, **characterised in that** the weighing system (14) is arranged in a housing (18) provided with an inlet opening (42) for air from the outside.

7. Work cabin according to claim 6, **characterised in that** the inlet opening (42) is provided with an aperture, the cross-section of which can be varied.

8. Work cabin according to claim 6 or claim 7, **characterised in that** the inlet opening (42) is closable.

9. Work cabin according to any one of claims 6 to 8, **characterised in that** a fan (46) is associated with the inlet opening (42).

10. Work cabin according to any one of claims 6 to 9, **characterised in that** a filter (44) is associated with the inlet opening (42).

11. Work cabin according to any one of claims 1 to 4, **characterised in that** the weighing system (14) is arranged in a housing (18) which is closed off towards air from the outside.

12. Work cabin according to claim 9, **characterised in that** the fan can be operated with a low stage for a weighing process and a very much higher stage for a cleaning process.

13. Work cabin according to any one of the preceding claims, **characterised in that** the load pick-up (12) is surrounded by wind protection means (34).

14. Work cabin according to any one of the preceding claims, **characterised in that** the work cabin (22) has a passage (24) through which a user can access into the work cabin (22).

15. Work cabin according to any one of the preceding claims, **characterised in that** it comprises an integrated vacuum cleaner.

16. Work cabin according to any one of the preceding claims, **characterised in that** it comprises a self-diagnostic unit.

17. Work cabin according to any one of the preceding claims, **characterised in that** it has a closable passage.

## Revendications

1. Cabine de travail (22) comprenant une balance intégrée (10), comprenant un capteur de charge (12) qui est disposé dans une zone de travail (20) de la cabine de travail (22), un système de pesée (14) qui est disposé à l'extérieur de la zone de travail (20) de la cabine de travail (22), et un élément de couplage (16) qui relie le capteur de charge (12) avec le système de pesée (14), la zone de travail (20) de la cabine de travail (22) présentant un orifice de ventilation (28) auquel est adjointe la partie aspirante d'un groupe de soufflerie et de filtration 30, c'est-à-dire un conduit de ventilation, et par laquelle l'air peut être aspiré hors de la zone de travail (20) de la cabine de travail (22).

2. Cabine de travail selon la revendication 1, **caractérisée en ce qu'**une paroi de séparation (40) est prévue entre la zone de travail (20) et le système de pesée (14), laquelle est munie d'une conduite de passage pour l'élément de couplage (16), et que l'élément de couplage (16) est passé à travers la conduite de passage essentiellement de manière étanche par rapport aux milieux.

3. Cabine de travail selon la revendication 2, **caractérisée en ce que** la paroi de séparation (40) se rabat avec une paroi arrière (26) de la cabine de travail (22).

4. Cabine de travail selon la revendication 2, **caractérisée en ce que** la paroi de séparation (40) pénètre dans la zone de travail (20).

5. Cabine de travail selon l'une des revendications 2 à 4, **caractérisée en ce qu'**un orifice (32) est prévu dans la paroi de séparation (40) et qu'une différence de pression est établie entre la zone de travail (20) et un espace dans lequel est disposé le système de pesée (14).

6. Cabine de travail selon la revendication 5, **caractérisée en ce que** le système de pesée (14) est disposé dans un boîtier (18) qui est muni d'un orifice d'entrée (42) pour de l'air extérieur.

7. Cabine de travail selon la revendication 6, **caractérisée en ce que** l'orifice d'entrée (42) est muni d'un diaphragme dont la section transversale peut être variée.

8. Cabine de travail selon la revendication 6 ou la revendication 7, **caractérisée en ce que** l'orifice d'entrée (42) peut être obturé.

9. Cabine de travail selon l'une des revendications 6 à 8, **caractérisée en ce qu'**une soufflerie (46) est adjointe à l'orifice d'entrée (42).

10. cabine de travail selon l'une des revendications 6 à 9, **caractérisée en ce qu'**un filtre (44) est adjoint à l'orifice d'entrée (42).

11. Cabine de travail selon l'une des revendications 1 4, **caractérisée en ce que** le système de pesée (14) est disposé dans un boîtier (18), lequel est fermé vis-à-vis de l'air extérieur.

12. Cabine de travail selon la revendication 9, **caractérisée en ce que** la soufflerie peut être mise en oeuvre en position faible pour un processus de pesée et en position beaucoup plus élevée pour un processus de nettoyage.

13. Cabine de travail selon l'une des revendications précédentes, **caractérisée en ce que** le capteur de charge (12) est entouré d'une protection contre le souffle (34).

14. Cabine de travail selon l'une des revendications précédentes, **caractérisée en ce que** la cabine de travail (22) présente un passage pour les mains (24) par lequel un usager peut manoeuvrer à l'intérieur de la cabine de travail (22).

15. Cabine de travail selon l'une des revendications précédentes **caractérisée en ce qu'**elle présente un aspirateur intégré.

16. Cabine de travail selon l'une des revendications précédentes, **caractérisée en ce qu'**elle présente une unité d'autodiagnostic.

17. Cabine de travail selon l'une des revendications précédentes, **caractérisée en ce qu'**elle présente un passage pour les mains pouvant être fermé.
